**Europäisches Patentamt**

**European Patent Office**

**Office européen des brevets**

(19)

(11) Veröffentlichungsnummer : **0 156 400**

**B1**

(12)

# EUROPÄISCHE PATENTSCHRIFT

(45) Veröffentlichungstag der Patentschrift :
**30.11.88**

(51) Int. Cl.⁴ : **A 01 F 15/14**

(21) Anmeldenummer : **85105231.6**

(22) Anmeldetag : **14.09.82**

(60) Veröffentlichungsnummer der früheren Anmeldung
nach Art. 76 EPÜ : **0075252**

(54) **Bindeeinrichtung von Maschinen zum Herstellen von zylindrischen Ballen.**

(30) Priorität : **17.09.81 US 303274**

(43) Veröffentlichungstag der Anmeldung :
**02.10.85 Patentblatt 85/40**

(45) Bekanntmachung des Hinweises auf die Patenterteilung : **30.11.88 Patentblatt 88/48**

(84) Benannte Vertragsstaaten :
**BE DE FR GB IT LU NL**

(56) Entgegenhaltungen :
**FR-A- 2 442 579**
**US-A- 2 667 729**
**US-A- 4 062 279**

(73) Patentinhaber : **DEERE & COMPANY**
**1 John Deere Road**
**Moline Illinois 61265 (US)**

(72) Erfinder : **Meiers, Gerald Franklyn**
**1014 Chester**
**Ottumwa Iowa 52501 (US)**

(74) Vertreter : **Fricke, Joachim, Dr. et al**
**Dr. R. Döring, Dr. J. Fricke, Patentanwälte Josephspi-**
**talstrasse 7**
**D-8000 München 2 (DE)**

## Beschreibung

Die Erfindung betrifft eine automatische Bindeeinrichtung von Maschinen zum Herstellen von zylindrischen Ballen aus Erntegut in einer Wickelkammer mit den Merkmalen des Oberbegriffs des Anspruchs 1.

Eine solche automatische Bindeinrichtung ist aus der US-A-2 667 729 bekannt. Bei dieser ist vor der Wickelkammer ein Schnurführungsarm um eine horizontale Achse in einer vertikalen Ebene zwischen Endstellungen verschwenkbar gelagert. Der Schwenkantrieb weist ein ständig in der gleichen Richtung angetriebenes Ritzel auf, mit dem ein Zahnrad, das einen Unterbrechungsbereich der Zahnung aufweist, über eine gesteuerte Federvorspann-Einrichtung in wirkungsmäßigen Eingriff treten kann, jedoch nur während bestimmter Phasen des Bindevorganges. Dabei wird der Schnurführungsarm in der vertikalen Ebene in einer Richtung durch Schwerkraft und Federkraft verschwenkt. Diese Verschwenkung in einer Richtung erfolgt in einer Phase, in der der mechanische Schwenkantrieb noch nicht in Gang gesetzt ist. Am Beginn dieser Phase erfolgt lediglich eine Entriegelung des Schnurführungsarmes, der sich vor Auslösung des Bindevorganges in seiner angehobenen Stellung befindet. Sobald der Schnurführungsarm sich in dieser Phase seiner unteren Stellung annähert, wird die von dem Schnurführungsarm mitgeführte Wickelschnur von der Wickeleinrichtung der Maschine und dem zylindrischen Ballen in der Wickelkammer erfaßt. Dadurch wird die Wickelschnur unter Zugkraft gesetzt und als Folge davon der mechanische Antrieb für den Schnurführungsarm in Gang gesetzt. Das Zahnrad, das in seiner Zahnung eine Unterbrechungsstelle aufweist, wird durch Federkraft soweit verdreht, daß es dabei in Eingriff mit der Zahnung des ständig angetriebenen Ritzels gelangt. Zwischen diesem Zahnrad und dem Schnurführungsarm ist eine Lenkeranordnung vorgesehen, durch die die Drehung des Zahnrades auf den Schnurführungsarm übertragen wird, so daß dieser aus seiner unteren Endstellung in die obere Endstellung angehoben wird. In dieser Antriebsverbindung ist ein Leerweg vorgesehen, so daß sich das Zahnrad über einen begrenzten Winkelbereich drehen kann, während der Schnurführungsarm noch in seiner unteren Stellung verharrt, um zusätzliche Wicklungen an dem einen Ende des zylindrischen Ballens aufzubringen.

Der bekannte Schnurführungsarm wird also in der einen Richtung durch Federkraft und Schwerkraft und in der anderen Richtung durch den mechanischen Antrieb bewegt. Der mechanische Antrieb ist nicht umkehrbar. Aufgrund dieser Ausbildung bedarf die bekannte automatische Bindeeinrichtung auch einer besonderen ge-steuerten Riegelvorrichtung, welche den Schnur-führungsarm in seiner angehobenen Stellung gegen Rückschwenken verriegelt und die bei Auslö-sung eines Bindevorganges den Schnurführungs-arm freigibt.

Bei halbautomatisch arbeitenden Bindeeinrichtungen ist es auch bekannt, den in einer horizontalen Ebene verschwenkbaren Garnführungsarm mit Hilfe eines doppelwirkenden hydraulischen Zylinders in beiden Richtungen zwangsläufig zu verschwenken. Um dabei die Zahl von Windungen der Bindeschnur um den zylindrischen Ballen während des Rückhubes des Schnurführungsarmes steuern zu können, ist eine einstellbare Drosseleinrichtung für das zu dem hydraulischen Zylinder zugespeiste Druckmittel vorgesehen (vgl. US-PS 3 894 484).

Es ist Aufgabe der Erfindung, eine Bindeeinrichtung mit den Merkmalen des Oberbegriffs des Anspruchs 1 so weiterzubilden, daß bei einem automatischen Betrieb der Bindeeinrichtung eine wesentlich zuverlässigere Führung des Schnurführungsarmes mit einfacheren Mitteln als bisher erzielt wird, wobei zugleich eine weitere Verbesserung des Bindevorganges selbst erreicht werden soll.

Diese Aufgabe wird durch die Lehre des Anspruchs 1 gelöst.

Bei der Bindeeinrichtung gemäß der Erfindung wird der Schnurführungsarm in beiden Schwenkrichtungen zwangsläufig durch den aus Zahnritzel und dem gezahnten Antriebsglied bestehenden Zahnantrieb zwangsläufig bewegt und in jeder Stellung gegen Rückdrehung gesichert. Dabei sind die miteinander zusammenwirkenden gezahnten Glieder des Zahnantriebes jeweils direkt mit dem Schnurführungsarm bzw. direkt mit dem umkehrbaren Schwenkantrieb verbunden. Dadurch wird einmal eine wesentlich einfachere Ausbildung des Antriebes verwirklicht. Zugleich wird dadurch aber auch eine sichere und zwangsläufige Sperrung des Schnurführungsarmes in seinen beiden Endstellungen gegen Rückdrehen erreicht.

Zwar sind Unterbrechungsabschnitte in der Zahnung von Zahngliedern eines Zahnantriebes, wie eingangs dargelegt, bekannt. Die Anordnung ist jedoch bei der automatischen Bindeeinrichtung gemäß der Erfindung so ausgebildet, daß der Unterbrechungsabschnitt der Zahnung an der Zahnung des anderen Zahngliedes so angreift, daß der Schnurführungsarm gegen Rückschwenken aus dieser seiner Endstellung gesperrt ist, während das mit dem umkehrbaren Schwenkantrieb verbundene gezahnte Antriebsglied durch den Schwenkantrieb weiter bewegt werden kann, ohne daß das mit dem Schnurführungsarm verbundene Ritzel weitergedreht wird. Dadurch wird nicht nur eine Rückdrehung des Schnurführungsarmes zunächst verhindern. Vielmehr wird damit auch auf einfache Weise erreicht, daß in dieser Endstellung des Schnurführungsarmes mehrere Windungen der Bindeschnur an einem Ende des zylindrischen Ballens aufgebracht werden können. In der anderen Endstellung stehen die gezahnten Glieder in ständigem gegenseitigem Zahneingriff, so daß auch in dieser Stellung der Schnurführungsarm gegen Rückschwenken gesichert ist, ohne daß es einer besonderen gesteuerten Riegeleinrichtung bedarf.

Die neue automatische Bindeeinrichtung zeichnet sich durch besondere Einfachheit und Robustheit aus. Sie gewährleistet eine besonders zuverlässige und zwangsweise Führung des Schnurführungsarmes in allen Phasen des Bindevorganges sowie in allen seinen Stellungen. Trotz der direkten Verbindung der gezahnten Glieder mit Schnurführungsarm und umkehrbarem Antrieb und trotz ständigen Kontaktes dieser gezahnten Glieder wird sichergestellt, daß der zylindrische Ballen an seinen beiden Enden jeweils mit mehreren Windungen versehen und damit besonders zuverlässig eingebunden werden kann.

Eine besonders einfache Ausbildung ergibt sich, wenn die Lehre nach Anspruch 1 durch die Maßnahmen des Anspruchs 2 weitergebildet wird. In diesem Fall weist das gezahnte Glied im Unterbrechungsabschnitt seiner Zahnung einen Bereich auf, dessen Umriß einer Fläche folgt, welche die Zahnköpfe einhüllt.

Um ein sicheres Wiedereingreifen der gezahnten Glieder bei Beginn der Rückführungsbewegung sicherzustellen, ist eine Vorspanneinrichtunggemäß Anspruch 3 vorgesehen. Dabei kann die zwangsläufige Bewegung des Schnurführungsarmes aus seiner der Ruhestellung entsprechenden Endstellung in die andere Endstellung dazu ausgenutzt werden, um die Vorspanneinrichtung gemäß Anspruch 4 selbsttätig neu zu spannen.

Die Erfindung wird nachfolgend anhand schematische Zeichnungen an einem Ausführungsbeispiel näher erläutert.

Es zeigen :

Figur 1 eine Ansicht der rechten Seite einer Maschine zum Herstellen von zylindrischen Ballen aus Erntegut mit einer automatischen Bindeeinrichtung gemäß der Erfindung.

Figur 2 im größeren Maßstabe und im Ausschnitt einen Querschnitt durch einen Teil der Wickelkammer der in Figur 1 gezeigten Maschine, wobei die Figur die Lage und Anordnung des Schnurführungsarmes der automatischen Bindeeinrichtung gemäß der Erfindung erkennen läßt ;

Figur 3 in Draufsicht ein Ausführungsbeispiel für die automatische Bindeeinrichtung nach der Erfindung ;

Figur 4 im weiter vergrößerten Maßstabe und im Ausschnitt die gezahnten Glieder des Zahnantriebes der neuen Bindeeinrichtung ;

Figur 5 eine Stirnansicht der Bindeeinrichtung ;

Figur 6 im Ausschnitt einen Querschnitt durch die Bindeeinrichtung nach Figur 3 und

Figur 7 eine schematische Darstellung des umkehrbaren Antriebes für den Schnurführungsarm der automatischen Bindeeinrichtung gemäß der Erfindung.

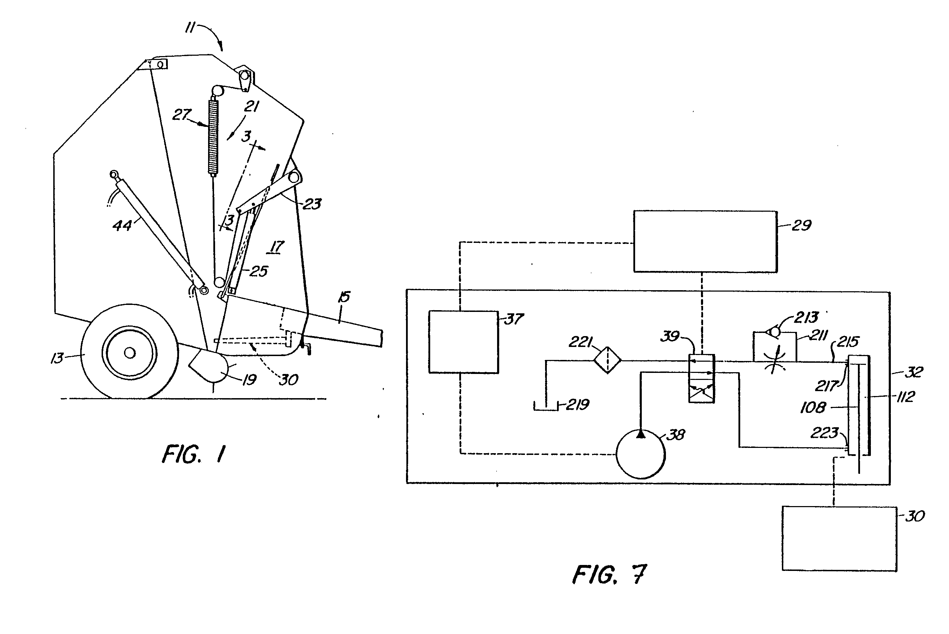

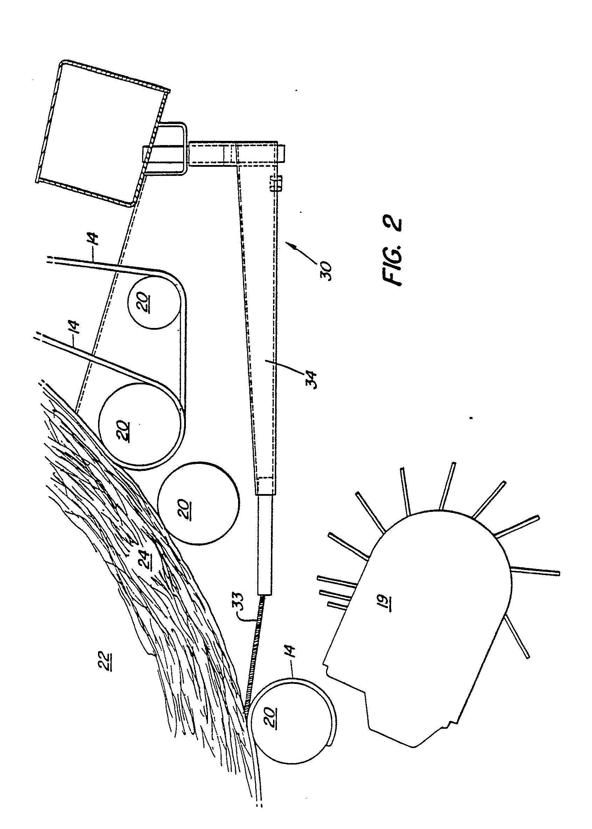

Die Figuren 1 und 2 zeigen eine Maschine zum Herstellen zylindrischer Ballen aus Erntegut. Die Maschine weist zwischen den aufrechten und sich parallel zur Fahrtrichtung erstreckenden Maschinenseitenwänden 17 und 18 eine Wickelkammer 22 auf, die durch mehrere Riemen 14 begrenzt ist. Die Riemen sind über eine Mehrzahl von Rollen geführt, die um quer zur Fahrtrichtung verlaufende Achsen drehbar gelagert sind. Einige dieser Rollen sind in Fig. 2 gezeigt. Im unteren Bereich ist vor der Wickelkammer ein Erntegutaufnehmer 19 üblicher Ausbildung angeordnet, der das Erntegut vom Boden aufnimmt und der Wickelkammer 22 zuführt. Bei der Bildung eines zylindrischen Ballens 24 in der Wickelkammer 22 können der Durchmesser und die Dichte des Ballens durch eine Vorspanneinrichtung 21 gesteuert werden, die über zwei äußere Steuerarme 23 mit Hilfe einer Federeinrichtung 27 und eines hydraulischen Zylinders 25 auf beweglich angeordnete Rollen 20 einwirkt, um den elastischen Widerstand zu verändern, gegen den die Arme 23 und damit die beweglichen Rollen bei Zunahme des Durchmessers des Ballens 24 nach außen ausweichen können.

Nach Fertigstellen eines zylindrischen Ballens 24 muß diese mit einer Bindeschnur 33 umwickelt werden. Dies erfolgt mit Hilfe einer automatischen Bindeeinrichtung.

Die in Fig. 1 gezeigte Maschine ist auf zwei Laufrädern am Boden abgestützt und kann mit Hilfe einer Zugeinrichtung 15 an einen nicht dargestelltn Ackerschleppers angehängt werden. Der Antrieb der Teile der Maschine erfolgt durch Anschluß der Maschine an die Zapfwelle des Ackerschleppers.

Die Bindeeinrichtung weist eine Schnurabgabeeinrichtung 30 auf, die einen in einer etwa horizontalen Ebene vor dem Eintritt in die Wickelkammer 22 zwischen zwei Endstellungen verschwenkbaren Schnurführungsarm 34 und einen zum Verschwenken dieses Armes dienenden hydraulischen Schwenkantrieb umfaßt, der in Fig. 7 schematisch mit 32 angegeben ist. Ferner ist gemäß Fig. 7 eine Steuereinrichtung 29 vorgesehen, die in Abhängigkeit von dem Fertigstellen eines zylindrischen Ballens den Bindevorgang auslöst. Zu diesem Zweck wird von der Steuereinrichtung 29 die Antriebseinrichtng 37 für eine hydraulische Pumpe 38 eingeschaltet bzw. ausgeschaltet, und ein Vierwege-Zweistellungsventil 39 umgeschaltet, welches zwischen dem doppelwirkenden hydraulischen Zylinder 112 und dem Sumpf 219 (vgl. Fig. 7) angeordnet ist. Der Antrieb nach Fig. 7 wird weiter unten noch näher erläutert. Nach Beendigung des Bindevorganges wird die Bindeschnur durch eine Vorrichtung (nicht gezeigt) durchtrennt und der Schlepperfahrer kann das Auswerfen des fertigen Ballens durch Betätigung des hydraulischen Zylinders 44 auslösen, durch den die Wickelkammer zur Rückseite der Maschine hin geöffnet werden kann, so daß der fertige Ballen aus der Maschine auf den Boden rollen kann. Danach ist die Maschine bereit zur Bildung des nächsten Ballens.

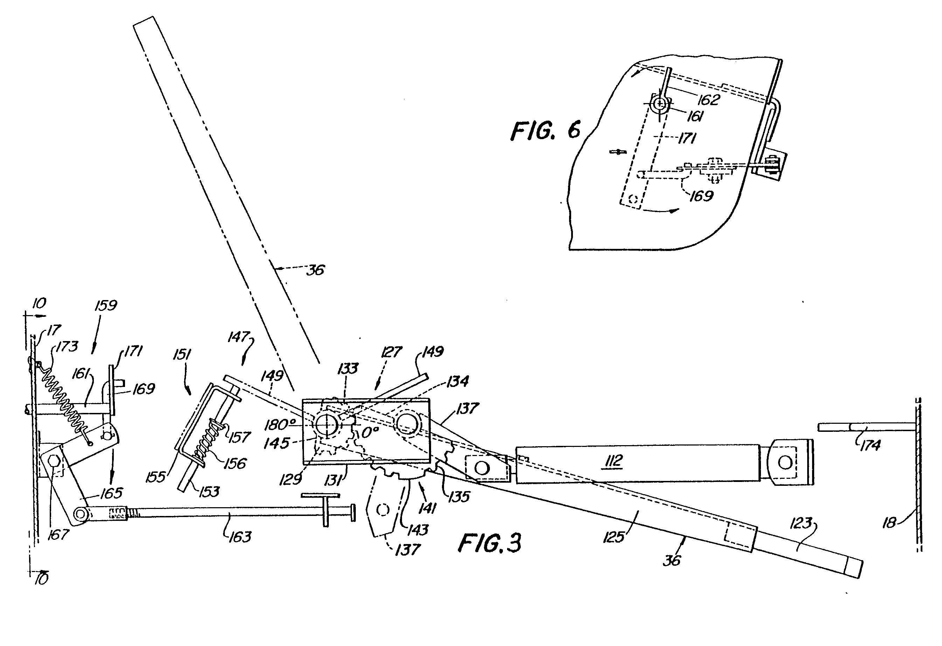

Die Bindeeinrichtung und die zugehörigen Teile sind in den Figuren 3 bis 7 näher dargestellt und werden nachfolgend erläutert. Bei dem beschriebenen Ausführungsbeispiel ist angenommen, daß es sich um eine Maschine zum Herstellen von zylindrischen Ballen von vergleichsweise geringer Länge handelt. Aus Fig. 3 ist ersichtlich, daß in diesem Fall der mit 36 bezeichnete Schnurführungsarm eine größere Länge aufweist als es der Hälfte des Abstandes zwischen den Seitenwänden 17 und 18 der Maschine entspricht. In Fig. 3 ist die Ruhestellung des Schnurführungsarmes 36 zwischen zwei Bindevorgängen in voll ausgezogenen Linien gezeigt. Bezogen auf eine quer zur Fahrtrichtung verlaufende Linie liegt diese Stellung bei einem Winkel von - 30°. Aus dieser Stellung wird der Schnurführungsarm in die zweite Endstellung verschwenkt, die strichpunktiert in Fig. 3 dargestellt ist. Diese Stellung entspricht einem Winkel von etwa 100°. Die Verschwenkung des Schnurführungsarmes erfolgt mit einem hydraulischen Schwenkantrieb 32, der in Fig. 7 gezeigt ist. Zwischen dem hydraulischen Schwenkantrieb 32 und dem Schnurführungsarm 36 ist ein Zahntrieb 127 angeordnet.

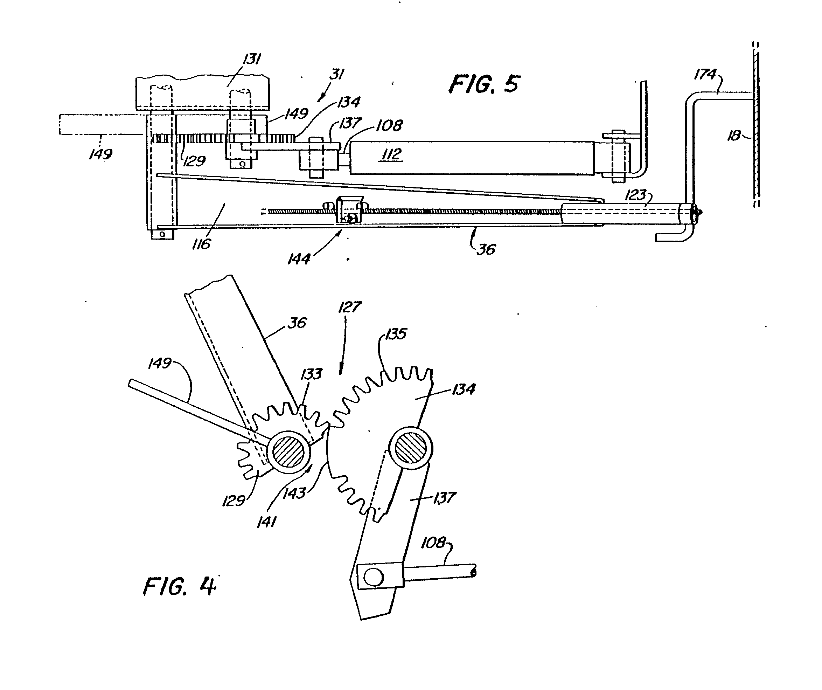

Der Schnurführungsarm 36 weist an seinem freien Ende eine rohrförmige Schnurführung 123 und eine damit verbundene Auflage 125 auf, die an ihrem radial inneren Ende mit dem Zahntrieb 127 verbunden ist. Ferner ist eine Spanneinrichtung 144 (Fig. 5) vorgesehen, welche dem Abzug der Bindeschnur einen vorbestimmten Widerstand entgegensetzt.

Der Zahntrieb 127 umfaßt ein Zahnritzel 129, das in einer Stützeinrichtung 131 rechts von der Mittellinie der Maschine zwischen den Seitenwänden 17 und 18 montiert ist und an seinem Umfang eine Zahnung 133 aufweist. Das Zahnritzel 129 ist drehfest mit dem Schnurführungsarm 36 verbunden. Der Zahntrieb 127 weist ein zweites gezahntes Antriebsglied 134 auf, das in der Stützeinrichtung 131 drehbar montiert ist und eine Zahnung 135 aufweist, die in direktem Eingriff mit der Zahnung 133 des Zahnritzels 129 steht. Der Zahnantrieb 127 wird durch einen doppelwirkenden hydraulischen Zylinder 112 des hydraulischen Schwenkantriebes 32 angetrieben. Zu diesem Zweck ist das freie Ende der Kolbenstange 108 des Zylinders an einem Verbindungsglied 137 angelenkt, das mit seinem anderen Ende drehfest mit dem gezahnten Antriebsglied 134 verbunden ist.

Ferner weist der Zahnantrieb 127 eine Kupplung 141 auf. Diese erlaubt es dem Schnurführungsarm 36 in seiner zweiten in Fig. 3 strichpunktiert dargestellten Stellung nahe der rechten Seitenwand 17 zu verweisen, um so weitere Windungen der Bindeschnur an dem betreffenden Ende des zylindrischen Ballens aufzubringen. Die Kupplung 144 besteht aus einem Unterbrechungsabschnitt 143 auf dem Umfang des gezahnten Antriebsgliedes 134. Es handelt sich dabei um einen von Zahnung freien Umfangsabschnitt des Antriebsgliedes, der bis in die Höhe des Kopfkreises der Zahnung 135 des Antriebsgliedes 134 reicht, wie dies besonders deutlich aus Fig. 4 hervorgeht. Die Zahnung 133 des Zahnritzels 129 erstreckt sich nur über einen Teilumfang des Ritzels während das Ritzel im übrigen segmentförmig abgeschnitten ist, um auf der der Zahnung 133 abgewandten Seite eine gerade Fläche 145 (Fig. 3) zu bilden.

Figur 3 zeigt die Eingriffstellung der gezahnten Elemente in der Ruhestellung des Schnurführungsarmes 36. Die Zahnungen befinden sich in vollem Eingriff. Da in der Ruhestellung der hydraulische Zylinder 112 stillsteht wird in dieser Stellung das Antriebsglied 134 festgehalten und durch den Zahneingriff zugleich der Schnurführungsarm 36 in seiner Ruhestellung festgelegt. Einer besonderen Verriegelung bedarf es nicht.

Figur 4 zeigt den Zahnantrieb 127 in der in Fig. 3 strichpunktierten Stellung des Schnurführungsarmes 36. Man erkennt, daß in dieser Stellung das Ende der Zahnung 133 an dem zahnungsfreien Unterbrechungsabschnitt 143 des Antriebsgliedes 134 anliegt. Auch wenn der hydraulische Zylinder 112 das Antriebsglied 134 über diese Stellung weiter hinausdreht, wird der Schnurführungsarm 36 nicht über die 100°-Stellung nach Figur 3 hinausverschwenkt. Andererseits ist ein Rückschwenken des Schnurführungsarmes aus dieser Stellung während des Weiterdrehens des Antriebsgliedes 134 ausgeschlossen, da der Unterbrechungsabschnitt 143 als die Rückdrehung verhindernder Anschlag für die Zahnung 133 des Ritzels 129 dient. Wenn dann der hydraulische Zylinder 112 umgesteuert wird und das Antriebsglied 134 in der entgegengesetzten Richtung dreht, gelangt schließlich der Unterbrechungsabschnitt 143 wieder in die in Fig. 4 gezeigte Stellung gegenüber der Zahnung 133 des Ritzels 129. Bei der Weiterdrehung des Antriebsgliedes 134 gelangt dann die Zahnung 133 wieder in Eingriff mit der Zahnung 135 und der Schnurführungsarm 36 wird in die Ausgangsstellung nach Fig. 3 zurückgeschwenkt. Um das Eingreifen der Zahnung 133 in die Zahnung 135 bei der Rückdrehbewegung des Antriebsgliedes 134 zu unterstützen ist eine Vorspanneinrichtung 147 vorgesehen (vgl. Fig. 3). Diese umfaßt einen Arm 149, der drehfest mit dem Zahnritzel 129 verbunden ist. Auf den Arm wirkt eine Federeinrichtung 151, die an dem Maschinenrahmen befestigt ist. Diese umfaßt einen Kolben 153, der durch eine Feder 156 im Uhrzeigersinne gemäß Figur 3 vorgespannt ist und der am Ende des Armes 149 anliegt. Die Feder 156 ist auf dem Kolben 153 aufgefädelt und stützt sich einerseits an einer Stützeinrichtung 155 und andererseits an einem Anschlag 157 des Kolbens ab.

Die Anordnung ist so getroffen, daß bei der Bewegung des Schnurführungsarmes 36 aus der Ruhestellung in die strichpunktierte zweite Endstellung nach Fig. 3 der Arm 149 schon vor Erreichen der Endstellung an dem Kolben 153 angreift und während seiner letzten Bewegungsphase bis in seine zweite Endstellung die Vorspanneinrichtung unter Ausnutzung der durch den Zylinder 112 aufgebrachten Schwenkkraft vorspannt. In dieser vorgespannten Stellung verbleibt die Vorspanneinrichtung 147, solange der Schnurführungsarm 36 in der zweiten Endstellung in Ruhe verbleibt. Sobald bei der Rückdrehung des Antriebsgliedes 134 die relative Stellung nach Fig. 4 erreicht ist, sorgt die Vorspannkraft, die auf den Arm 149 einwirkt dafür, daß die Zahnung 133 zuverlässig in Eingriff mit der Zahnung 135 des Antriebsgliedes 134 gelangt Damit ist die Kupplung wieder eingerückt.

Der automatischen Bindeeinrichtung ist weiterhin eine Verriegelungseinrichtung 159 zugeordnet. Diese weist ein Verriegelungsglied 161 mit einem Finger 162 auf (vgl. Figuren 3 und 6), der an der unteren Fläche eines das Ventil 39 (Fig.7) steuernden Armes 39 angreift. Wenn das Verriegelungsglied 161 gemäß Fig. 6 im Gegenuhrzeigersinne gedreht wird, wird der Steuerarm des Ventils verschwenkt, um den hydraulischen Schwenkantrieb umzusteuern und den Schnurführungsarm 36 auf der zweiten Endstellung nahe der Seitenwand 17 in die Ruhestellung nahe der Seitenwand 18 zurückzubewegen. Die Drehung des Verriegelungsgliedes 161 wird durch den Schnurführungsarm 36 eingeleitet, in dem das Verbindungsglied 137 zwischen dem hydraulischen Zylinder 112 und dem Schnurführungsarm 36 bei Annäherung an die zweite Endstellung an einem Betätigungsarm 163 angreift, der über einen bei 167 an der Seitenwand 17 angelenkten Winkelhebel 165 und ein Verbindungselement 169 auf eine Platte 171 einwirkt. Die Platte 171 ist zusammen mit dem Verriegelungsglied 161 und dem Finger 162 schwenkbar gelagert. Die Verschiebung des Betätigungsarmes 163 nach links in Fig. 3 führt zu einer Schwenkbewegung des Winkelhebels 165 im Uhrzeigersinne, mit der Folge einer Schwenkbewegung der Platte 171 und des Verriegelungsgliedes im Gegenuhrzeigersinne, wie dies jeweils in den Figuren 3 und 6 durch Pfeile angedeutet ist. Der Finger 162 des Verriegelungsgliedes 161 greift seinerseits an dem Steuerarm des Ventils 39 an. Wenn das Verbindungsglied 137 den Betätigungsarm 163 freigibt, wird dieser über die an der Seitenwand 17 verankerte Feder 173 wieder nach rechts in die Ausgangsstellung zurückgeführt.

Aus Fig. 3 ist ersichtlich, daß an der Seitenwand 18 eine Schnurführung 174 vorgesehen ist. Diese legt beim Zurückschwenken des Schnurführungsarmes 36 in die Ausgangsstellung nach Fig. 3 die relative Bahn der Bindeschnur gegenüber dem zylindrischen Ballen fest, so daß auch am linken Ende des zylindrischen Ballens 24 auf diese Weise während der letzten Phase der Rückschwenkung des Schnurführungsarmes mehrere zusätzliche Umwicklungen aufgebracht werden.

Während des Betriebes der Maschine wird dann, wenn der Ballen 24 einen vorbestimmten Durchmesser in der Wickelkammer 22 erreicht hat, durch die Steuereinrichtung 29 (Fig. 7) der Steuerarm des Ventils 39 erneut umgesteuert, und zwar in eine Stellung, durch die das Ausfahren der Kolbenstange 108 durch den Zylinder 112 und damit ein Verschwenken des Schnurführungsarmes 36 aus der ausgezogenen Ruhestellung nach Fig. 3 in die zweite Endstellung ausgelöst wird. In der umgesteuerten Stellung wird der Steuerarm des Ventils durch Angreifen an dem Finger 162 des Verriegelungsgliedes 171 gehalten. Beim Ausfahren des Zylinders 112 werden das Antriebsglied 134 und das Verbindungsglied 137 im Uhrzeigersinne nach Fig. 3 verschwenkt. Dadurch wird das Ritzel mit dem Schnurführungsarm 36 im Gegenuhrzeigersinne verschwenkt, und zwar so lange, bis die Kupplung 141 nach Fig. 4 wirksam wird. Der weitere Ablauf der Vorgänge wurde anhand der Figuren bereits vorstehend beschrieben.

Wenn der Schnurführungsarm 36 nach einem Bindezyklus wieder in die Ruhestellung nach Fig. 3 zurückkehrt, wird eine nicht dargestellte Schnurtrenneinrichtung automatisch betätigt, um die Bindeschnur 33 gegenüber dem zylindrischen Ballen 24 abzutrennen.

Bei geringer Länge der zylindrischen Ballen sind die Raumverhältnisse in der Maschine besonders beengt. Der Schnurführungsarm 36 muß daher deutlich vor der Wickelkammer 22 angeordnet werden. Er bedarf im Vergleich zur Länge des Ballens eine relativ große Länge, damit inbs. bei Beginn des Bindevorganges das Schnurende an einer Stelle am Eingang der Wickelkammer in Bereitschaft gehalten wird, die der Wickelkammer nahe genug ist, so daß das Schnurende von dem Erntegut mit in die Wickelkammer eingezogen und so der Bindevorgang ausgelöst werden kann. Diese Forderungen werden durch die Ausbildung der dargestellten automatischen Bindeeinrichtung in günstiger und einfacher Weise erfüllt. Durch Anordnung der Schwenkachse des Schnurführungsarmes in Fig. 3 rechts von der Mittellinie zwischen den Seitenwänden 17 und 18 wird erreicht, daß der Schnurführungsarm über die weiter oben definierte Nullstellung hinaus in eine demgegenüber Minus-Stellung von z. B. - 15° verschwenkt werden kann. Gleichzeitig ist in Verbindung mit der Schnurführung 174 auch dafür gesorgt, daß an dem der Seitenwand 18 nahen Ende des Ballens mehrere Schnurwindungen aufgebracht werden können. Durch die Kupplung 141 wird sichergestellt, daß auch an dem der Seitenwand 17 nahen Ende mehrere Wicklungen aufgebracht werden können, ohne daß dazu der hydraulische Schwenkantrieb 32 stillgesetzt werden muß.

Der hydraulische Schwenkantrieb, des Gegenstand des Patents EP-B-0 075 252 ist, ist im einzelnen in Fig. 7 gezeigt. Zu diesem gehört der doppelt wirkende hydraulische Zylinder 112, dessen Kolbenstange mit dem Schnurführungsarm über das Verbindungsglied 137 verbunden ist. Der Zylinder wird durch eine hydraulische Pumpe 38 gespeist, deren Pumpenantrieb 37 durch die Steuereinrichtung 29 gesteuert wird. Zwischen der Pumpe 38 und dem Zylinder ist ein Vierwege/Zweistellungsventil 39 angeordnet. Ferner ist eine einstellbare Strömungsventilanordnung 211 in der zu dem geschlossenen Ende des Zylinders 112 führenden Leitungen 215 vorgesehen. Die Ventilanordnung ist so ausgebildet, daß in Fig. 7 eine Durchströmung der Leitung 215 nach links geregelt ist, während eine Durchströmung in der entgegengesetzten Richtung ungesteuert erfolgt. Das Ausfahren der Kolbenstange 108 erfolgt somit ungesteuert, während beim Einfahren der Kolbenstange das Abfließen des Druckfluids aus dem geschlossenen Ende des Zylinders 112 in den Sumpf 219 geregelt erfolgt. Die Leitung 215 ist bei 217 an das geschlossene Ende des Zylinders 112 angeschlossen, während eine dazu parallele zweite Leitung an dem offenen Ende des Zylinders bei 223 angeschlossen ist. Die Strömungssteuerventilanordnung 211 weist in der Leitung 215 eine regelbare Drosselstelle und in einer Parallelleitung dazu ein in Richtung auf den Zylinder 112 öffnendes Rückschlagventil 213 auf. In Fig. 7 ist der hydraulische Schwenkantrieb 32 in der Stellung gezeigt, die der Ruhestellung des Schnurführungsarmes 36 entspricht. Die Pumpe 38 steht still. Ist das Aufwickeln eines zylindrischen Ballens beendet wird durch die Steuereinrichtung 29 die Pumpe 38 in Betrieb gesetzt und der Steuerarm des Ventils in eine Stellung gebracht, welche ein Ausfahren der Kolbenstange 108 ermöglicht. Das vom Zylinder 112 rückfließende Öl gelangt vom Leitungsanschluß 223 über das Ventil 39 und den Filter 221 in den Sumpf 219. Wenn der Schnurführungsarm seine andere Stellung erreicht wird das Ventil 39 über das Verbindungsglied 137 und die Verriegelungseinrichtung 159 umgesteuert, so daß nunmehr die Pumpe mit dem Anschluß 223 des Zylinders verbunden ist und die Kolbenstange 108 eingefahren wird. Das aus dem Anschluß 217 des Zylinders austretende Druckfluid wird in dieser Phase strömungsgeregelt dem Sumpf 219 zugeleitet. Wenn der Schnurführungsarm 36 die Ruhestellung erreicht wird die Schnurtrenneinrichtung betätigt und der Ballen durch den Fahrer ausgeworfen. Danach wird durch die Steuereinrichtung 29 der Pumpenantrieb 37 abgeschaltet. Das Ventil 39 bleibt in der Stellung, die es bei der Rückführung des Schnurführungsarmes 36 eingenommen hatte. Der Steuerarm des Ventils gelangt in eine die Stellung des Ventils nicht ändernde Ruhestellung, aus der er bei Beginn des nächsten Bindevorganges unter Umsteuerung des Ventils 39 durch die Steuereinrichtung 29 bewegt wird.

Zwischen zwei Bindevorgängen ist somit der hydraulische Schwenkantrieb abgeschaltet, während die der Ruhestellung entsprechende Stellung des Zahnantriebes 127 zwangsweise aufrechterhalten wird, um den Schnurführungsarm 36 sicher in der Ruhestellung zu halten.

## Patentansprüche

1. Automatische Bindeeinrichtung von Maschinen zum Herstellen von zylindrischen Ballen aus Erntegut in einer Wickelkammer (22), bei der die Bindeeinrichtung eine Abgabeeinrichtung (30) zum Abgeben und Einführen der Bindeschnur (33) in die Wickelkammer zum Umwickeln des gebildeten zylindrischen Ballens, einen zwischen Endstellungen vor der Wickelkammer hin- und herschwenkbaren Schnurführungsarm (34, 36), einen umkehrbaren Schwenkantrieb (32) zum zwangsweisen Verschwenken des Schnurführungsarmes in beiden Richtungen und eine Steuereinrichtung (29) zum Auslösen eines Schwenkzyklus aufweist, dadurch gekennzeichnet, daß die Schwenkachse des Schnurführungsarmes (34, 36) drehfest mit einem Zahnritzel (129) oder einem äquivalenten gezahnten Glied verbunden ist und ein direkt mit dem umkehrbaren Schwenkantrieb (32) verbundenes und eine Zahnung (135) aufweisendes Antriebsglied (134) vorgesehen ist, das über den Schwenkbereich und in der ersten Endstellung des Schnurführungsarmes (36) mit dem Zahnritzel (129) oder dem äquivalenten gezahnten Element in ständigem Zahneingriff steht und das in einem der zweiten Endstellung zugeordneten Bereich einen Unterbrechungsabschnitt (143) in der Zahnung (135) aufweist, der an der Zahnung (133) des Zahnritzels (129) derart angreift, daß das Antriebsglied (134) durch den Schwenkantrieb (32) ohne Antrieb des Ritzels (129) weiterbewegbar ist und gleichzeitig der Schnurführungsarm (34, 36) gegen Rückschwenken aus dieser Endstellung gesperrt ist.

2. Automatische Bindeeinrichtung nach Anspruch 1, dadurch gekennzeichnet, daß der Unterbrechungsabschnitt (143) ein zahn- und nutenfreier Bereich des Antriebsgliedes (134) ist.

3. Automatische Bindeeinrichtung nach Anspruch 1 oder 2, dadurch gekennzeichnet, daß eine Vorspanneinrichtung (147) vorgesehen ist, die an dem Schnurführungsarm (34, 36) angreift und diesen in der zweiten Endstellung in Richtung auf die erste Endstellung vorspannt.

4. Automatische Bindeeinrichtung nach Anspruch 3, dadurch gekennzeichnet, daß der Schnurführungsarm (36) oder ein drehfest mit diesem verbundener Arm (149) an der Vorspanneinrichtung (147) bei Annäherung an die zweite Endstellung angreift und infolge Weiterschwenkens in die zweite Endstellung die Vorspanneinrichtung (147) selbsttätig spannt.

## Claims

1. An automatic binding device of machines for producing round bales from crop material in a winding chamber (22), in which the binding device comprises a delivery means (30) for delivering the binding twine (33) and introducing it into the winding chamber for wrapping around the round bale formed, a twine guide arm (34, 36) which can be pivoted to and fro between limit positions in front of the winding chamber, a reversible pivoting drive (32) for positive pivotal movement of the twine guide arm in both directions, and a control means (29) for initiating a pivoting cycle characterised in that the pivot shaft of the twine guide arm (34, 36) is non-rotatably connected to a pinion (129) or an equivalent toothed member and there is provided a drive member (134) which is directly connected to the reversible pivoting drive (32) and which has a tooth configuration (135) and which is in constant engagement with the pinion (129) or the equivalent toothed element over the range of pivotal movement and in the first limit position of the twine guide arm (36) and which in a region associated with the second limit position has an interruption portion (143) in the tooth configuration (135), the interruption portion (143) engaging the tooth configuration (133) of the pinion (129) in such a way that the drive member (134) can be moved further by the pivoting drive (32) without driving the pinion (129) and at the same time the twine guide arm (34, 36) is prevented from pivoting back out of that limit position.

2. An automatic binding device according to claim 1 characterised in that the interruption portion (143) is a region of the drive member (134) which is without teeth and grooves.

3. An automatic binding device according to claim 1 or claim 2 characterised in that there is provided a biasing means (147) which acts on the twine guide arm (36) and biases it in the second limit position towards the first limit position.

4. An automatic binding device according to claim 3 characterised in that the twine guide arm (36) or an arm (149) non-rotatably connected thereto engages the biasing means (147) on approaching the second limit position and as a result of further pivotal movement into the second limit position automatically tensions the biasing means (147).

**Revendications**

1. Dispositif de liage automatique de machines destinées à produire des balles cylindriques à partir de produits de récolte dans une chambre d'enroulement (22) où le dispositif de liage comporte un dispositif de distribution (30) pour débiter et introduire la corde de liage (33) dans la chambre d'enroulement pour l'enrouler autour de la balle cylindrique formée, un bras de guidage de corde (34, 36) pouvant effectuer en pivotant des mouvements de va-et-vient entre deux positions extrêmes devant la chambre d'enroulement, un mécanisme d'entraînement en pivotement réversible (32) pour obliger à pivoter le bras de guidage de corde dans les deux sens et un dispositif de commande (29) pour déclencher un cycle de pivotement, caractérisé en ce que l'axe de pivotement du bras de guidage de corde (34, 36) est solidarisé à un pignon (129) ou un organe denté équivalent et en ce qu'il est prévu un organe d'entraînement (134) relié directement au mécanisme d'entraînement en pivotement réversible (32) et comportant une denture (135), qui engrène constamment sur le domaine de pivotement et dans la première position extrême du bras de guidage de corde (36) avec le pignon (129) ou l'élément denté équivalent et qui comporte, dans une zone correspondant à la seconde position extrême, une section d'interruption (14) dans la denture (135), qui agit sur la denture (133) du pignon (129) de telle façon que l'organe d'entraînement (134) peut continuer à être déplacé par le mécanisme d'entraînement en pivotement (32) sans entraînement du pignon (129), tandis que le bras de guidage de corde (34, 36) est en même temps empêché de quitter cette position extrême en reculant en pivotant.

2. Dispositif de liage automatique suivant la revendication 1, caractérisé en ce que la section d'interruption (143) est une zone sans dents ni encoches de l'organe d'entraînement (134).

3. Dispositif de liage automatique suivant la revendication 1 ou 2, caractérisé en ce qu'il est prévu un dispositif de précontrainte (147) qui agit sur le bras de guidage de corde (36) et le précontraint, dans la seconde position extrême, en direction de la première position extrême.

4. Dispositif de liage automatique suivant la revendication 3, caractérisé en ce que le bras de guidage de corde (36) ou un bras (149) solidaire de celui-ci agit sur le dispositif de précontrainte (147) à l'approche de la seconde position extrême et active automatiquement le dispositif de précontrainte (147) en raison de la poursuite du pivotement vers la seconde position extrême.

FIG. 7

FIG. I

FIG. 2

FIG. 6

FIG.3

0 156 400

FIG. 5

FIG. 4

0 156 400